(19) Europäisches Patentamt
European Patent Office
Office européen des brevets

(11) Veröffentlichungsnummer: **0 376 237**
**A1**

(12) # EUROPÄISCHE PATENTANMELDUNG

(21) Anmeldenummer: **89123923.8**

(22) Anmeldetag: **27.12.89**

(51) Int. Cl.5: **C08K 5/3492, C08L 77/00, //(C08L77/00,67:02, C08K5:3492)**

(30) Priorität: **29.12.88 DE 3844228**

(43) Veröffentlichungstag der Anmeldung: **04.07.90 Patentblatt 90/27**

(84) Benannte Vertragsstaaten: **BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Steiert, Peter, Dr.**
**Madenburgstrasse 10**
**D-6700 Ludwigshafen(DE)**
Erfinder: **Betz, Walter, Dr.**
**Weimarer Strasse 45**
**D-6700 Ludwigshafen(DE)**
Erfinder: **Plachetta, Christoph, Dr.**
**Albert-Einstein-Allee 12**
**D-6703 Limburgerhof(DE)**
Erfinder: **Koch, Eckhard Michael, Dr.**
**Merowingerstrasse 8**
**D-6701 Fussgoenheim(DE)**

(54) **Flammfeste thermoplastische Formmassen auf der Basis von Polyamiden und Polyester-Elastomeren.**

(57) Thermoplastische Formmassen, enthaltend als wesentliche Komponenten
A) 40 bis 99,55 Gew.% eines thermoplastischen Polyamids,
B) 0,45 bis 15 Gew.% eines thermoplastischen Polyester-Elastomeren,
C) 0,05 bis 1,99 Gew.% Melamincyanurat
sowie darüber hinaus
D) 0 bis 50 Gew.% faser- oder teilchenförmige Füllstoffe oder deren Mischungen.

EP 0 376 237 A1

Xerox Copy Centre

## Flammfeste thermoplastische Formmassen auf der Basis von Polyamiden und Polyester-Elastomeren

Die vorliegende Erfindung betrifft thermoplastische Formmassen, enthaltend als wesentliche Komponenten

A) 40 bis 99,55 Gew.% eines thermoplastischen Polyamids,

B) 0,45 bis 15 Gew.% eines thermoplastischen Polyesterelastomeren,

C) 0,05 bis 1,99 Gew.% Melamincyanurat

sowie darüber hinaus

D) 0 bis 50 Gew.% faser- oder teilchenförmige Füllstoffe oder deren Mischungen.

Außerdem betrifft die Erfindung die Verwendung derartiger Formmassen zur Herstellung von Formkörpern sowie die Formkörper, die unter Verwendung dieser Formmassen als wesentliche Komponenten erhältlich sind.

Aus der älteren, nicht vorveröffentlichten Patentanmeldung 38 06 271.2 ist bekannt, daß Polyamidformmassen in Abmischung mit bis zu 15 Gew.% Polyester-Elastomeren ein gutes Gesamtspektrum der mechanischen Eigenschaften aufweisen; trotz des Einsatzes des Polyester-Elastomeren weisen die Formkörper dieser Formmassen eine hevorragende Steifigkeit und Schlagzähigkeit bei tiefen Temperaturen sowie Fließfähigkeit auf.

Die Verwendung des Flammschutzmittels Melamincyanurat in Polyamidformmassen ist unter anderem aus der DE-A 27 40 092 und aus der DE-A 29 37 379 bekannt. Der Einsatz dieses Flammschutzmittels ist jedoch nicht unproblematisch. Wenn die Menge des Melamincyanurats zu groß ist, so werden die mechanischen Eigenschaften beeinträchtigt. Melamin sublimiert während der Formgebung und bildet somit Ansätze in der Form. Ein weiterer Nachteil besteht in der Eigenschaft des Ausblühens dieses Flammschutzmittels.

Wenn die Menge des Melamincyanurats zu gering ist, so sind die Flammschutzwirkungen nicht befriedigend.

So wird in der DE-A 29 37 379 von einem Anteil unter 2 Gew.% von Melamincyanurat in der Polyamidformmasse abgeraten; bei Fasern wird sogar ein 3 %iger Mindestanteil des Flammschutzadditivs empfohlen. Ähnliche Empfehlungen waren ebenso aus der DE-A 27 40 092 bekannt.

Entsprechende Beispiele weisen eine Flammwidrigkeit (Entflammbarkeit) gemäß UL-94 von V-2 auf, mit einer sehr hohen Gesamtbrenndauer.

Der vorliegenden Erfindung lag daher die Aufgabe zugrunde, thermoplastische Formmassen zur Verfügung zu stellen, die ein gutes Gesamtspektrum der mechanischen Eigenschaften und den für ihre Anwendungszwecke nötigen Flammschutz aufweisen.

Diese Aufgabe wird erfindungsgemäß durch die eingangs definierten thermoplastischen Formmassen gelöst.

Bevorzugte Massen dieser Art und ihre Verwendung sind den Unteransprüchen zu entnehmen.

Die als Komponente A) in den Massen enthaltende Polyamide sind an sich bekannt und umfassen die halbkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem Diamin, welches bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan- und Dodecandisäure.

Es ist auch möglich, gemäß der Erfindung Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Bevorzugt werden lineare Polyamide mit einem Schmelzpunkt über 200 °C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,5 bis 5 auf,

bestimmt an einer 1 gew.%igen Lösung in 96 %iger Schwefelsäure bei 23° C, was einem Molekulargewicht von etwa 15 000 bis 45 000 entspricht. Polyamide mit einer relativen Viskosität von 2,5 bis 3,5, insbesondere 2,6 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Der Anteil der Polyamide A) an den erfindungsgemäßen Formmassen beträgt 40 bis 99,5, vorzugsweise 50 bis 99 und insbesondere 60 bis 98 Gew.%.

Als Komponente B) enthalten die erfindungsgemäßen thermoplastischen Formmassen 0,45 bis 15, insbesondere 1 bis 12 und besonders bevorzugt 1 bis 5 Gew.% bezogen auf das Gesamtgewicht der Formmassen, eines thermoplastischen Polyester-Elastomeren.

Unter Polyester-Elastomeren werden dabei segmentierte Copolyetherester verstanden, die langkettige und kurzkettige Segmente enthalten. Die langkettigen Segmente leiten sich in der Regel von Polyalkylenetherdiolen und die kurzkettigen Segmente von niedermolekularen Diolen und Dicarbonsäuren ab.

Derartige Produkte sind an sich bekannt und in der Literatur beschrieben. Nur beispielsweise sei hier auf die US-Patentschriften 3 651 014, 3 784 520, 4 185 003 und 4 136 090, sowie auf die Veröffentlichungen von G.K. Hoeschele in Chimia 28, (9), 544 (1974), Angew. Makromolek. Chemie 58/59, 299 - 319 (1977) und Pol. Eng. Sci. 1974, 848 verwiesen. Auch im Handel sind entsprechende Produkte unter den Bezeichnungen Hytrel® (DuPont), Arnitel® (Akzo) sowie Pelprene® (Toyobo Co. Ltd.) erhältlich.

Ganz allgemein setzen sich thermoplastische Copolyetherester-Elastomere aus langkettigen Segmenten der allgemeinen Formel

$$O-G-O-\overset{O}{\overset{\|}{C}}-R-\overset{O}{\overset{\|}{C}}- \qquad Ia$$

und kurzkettigen Segmenten der allgemeinen Formel

$$-O-D-O-\overset{O}{\overset{\|}{C}}-R-\overset{O}{\overset{\|}{C}}- \qquad Ib$$

zusammen,

wobei

G einen zweiwertigen Rest, der nach der Entfernung der terminalen Hydroxylgruppen aus einem Polyalkyletherdiol mit einem Molekulargewicht von vorzugsweise 400 bis 6000, insbesondere 600 bis 4000 entsteht,

D einen zweiwertigen Rest, der nach Entfernung der terminalen Hydroxylgruppen aus einem niedermolekularen Diol mit einem Molekulargewicht von vorzugsweise weniger als 250 entsteht, und

R einen zweiwertigen Rest, der nach Entfernung der Carboxylgruppen aus einer Dicarbonsäure mit einem Molekulargewicht von vorzugsweise weniger als 300 entsteht,

bedeuten.

Es versteht sich, daß auch Mischungen von mehreren Polyalkylenetherdiolen, mehreren Diolen oder mehreren Dicarbonsäuren eingesetzt werden können.

Die Polyalklyenetherdiole HO-G-OH haben vorzugsweise einen Schmelzpunkt von weniger als 55° C und ein Kohlenstoff/Sauerstoff-Molverhältnis von vorzugsweise 2 bis 10, insbesondere 2 bis 6.

Beispiele für Polyalkylenetherdiole sind Poly(ethylenoxid)glycol, Poly(1,2-propylenoxid)glycol, Poly(1,3-propylenoxid)glycol, Poly(1,2-butylenoxid)glycol, Poly(1,3-butylenoxid)glycol, Poly(1,4-butylenoxid)glycol, Poly(pentamethylenoxid)glycol, poly(hexamethylenoxid)glycol,. Poly(heptamethylenoxid)glycol, Poly(octamethylenoxid)glycol, Poly(nonamethylenoxid)glycol sowie statistische oder Blockcopolymere aus verschiedenen der vorstehend genannten Glycole. Bevorzugt werden Poly(ethylenoxid)glycol, Poly(1,2-propylenoxid)glycol, Poly(1,3-propylenoxid)glycol und Poly(1,4-butylenoxid)glycol sowie deren Mischungen. Der Gewichtsanteil der langkettigen Segmente, die sich von den vorstehenden Polyalkylenoxidglykolen und Dicarbonsäuren ableiten, liegt im allgemeinen im Bereich von 5 bis 70 Gew.%, vorzugsweise von 7 bis 50 Gew.%, bezogen auf das Gesamtgewicht der Komponente B.

Als Diole HO-D-OH kommen ganz allgemein niedermolekulare Diole mit Molekulargewichten von vorzugsweise weniger als 250 in Betracht. Diese können lineare oder verzweigte, cycloaliphatische oder aromatische Grundstrukturen aufweisen.

Diole mit 2 bis 15 C-Atomen werden bevorzugt. Beispielhaft seien hier nur 1,2-Ethandiol, 1,3-Propandiol, 1,2-Propandiol, 1,4-Butandiol, 1,3-Butandiol, 1,2-Butandiol, 1,5-Pentandiol, 2,2-Dimethyl-1,3-propandiol, 1,6-Hexandiol sowie dessen Isomere, Decamethylendiol, die isomeren Dihydroxycyclohexane, Resorcin, Hydrochinon und die verschiedenen Dihydroxynaphthaline genannt. Besonders bevorzugt werden aliphatische Diole mit 2 bis 8, insbesondere 2 bis 4 C-Atomen, wie 1,2-Ethandiol, 1,3-Propandiol und 1,4-Butandiol.

Auch ungesättigte Diole haben sich in einigen Fällen als geeignet herausgestellt, z.B. But-2-en-1,4-diol,

insbesondere in Mischung mit den vorstehend genannten gesättigten Diolen. Beispiele für Polyetherester aus derartigen Mischungen sind der EP-A 49 823 zu entnehmen.

Weiterhin eignen sich als Diole auch noch Diphenole wie 4,4-Dihydroxydiphenyl, Di-(4-hydroxyphenyl)-methan und 2,2-Di-(4-hydroxyphenyl)propan (häufig als Bisphenol A bezeichnet).

Selbstverständlich können anstelle der Diole auch deren esterbildende Derivate eingesetzt werden, beispielsweise die Ester leichtflüchtiger Carbonsäuren.

Die Dicarbonsäuren der Struktureinheit HOOC-R-COOH weisen vorzugsweise Molekulargewichte von weniger als 300 und können aromatisch, aliphatisch oder cycloaliphatisch sein. Die Dicarbonsäuren können auch Substituenten aufweisen, die im Verlauf der Polymerisationsreaktion nicht stören.

Als Beispiele für aromatische Dicarbonsäuren seien Terephthalsäure, Isophthalsäure, substituierte Dicarbonsäuren der allgemeinen Formel

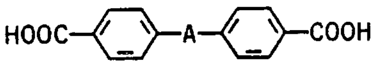

wobei A eine chem. Bindung, eine Alkylengruppe mit 1,3- C-Atomen, -CO-, -5- oder $-SO_2-$ ist, 1,5-, 2,6- und 2,7-Naphthalindicarbonsäure und deren $C_1$-$C_6$-alkylsubstituierten Derivate genannt. Von diesen werden Terephthalsäure, Isophthalsäure, deren Mischungen oder Mischungen aus Tere- oder Isophthalsäure mit anderen Dicarbonsäuren bevorzugt.

Aliphatische Dicarbonsäuren, die eingesetzt werden können sind beispielsweise Oxalsäure, Fumarsäure, Maleinsäure, Citraconsäure, Sebacinsäure, Adipinsäure, Glutarsäure, Succinsäure und Azelainsäure.

Selbstverständlich können auch Mischungen verschiedener aliphat. Dicarbonsäuren eingesetzt werden. Wie im Fall der Diole können anstelle der Säuren selbst auch deren esterbildende Derivate eingesetzt werden. Dies hat sich in einigen Fällen auch als besonders vorteilhaft herausgestellt.

Wegen weiterer langkettiger Glykole HO-G-OH, kurzkettiger Diole HO-D-OH und Dicarbonsäuren HOOC-R-COOH sei auf die US-A 3 651 014 verwiesen.

Wie bereits vorstehend erwähnt, beträgt der Anteil der langkettigen Segmente im allgemeinen 5 bis 70 Gew.%, vorzugsweise 7 bis 50 Gew.% und der Anteil der kurzkettigen Segmente entsprechend 30 bis 95 Gew.%, vorzugsweise 50 bis 93 Gew.%. Der Gewichtsanteil der jew. Segmente beeinflußt unter anderem die Härte der Produkte.

Die Dicarbonsäuren in der langkettigen und kurzkettigen Segmenten können dabei gleich oder verschieden sein; ebenso können auch bei der Herstellung der langkettigen bzw. kurzkettigen Segmente Mischungen von Diolen oder Dicarbonsäuren eingesetzt werden.

Die vorstehenden Ausführungen zeigen, daß eine Vielzahl verschiedener segmentierter Copolyetherester als Komponente B) eingesetzt werden kann. Von diesen werden Copolyetherester, deren langkettige Einheiten sich von Poly(1,4-alkylenoxid)glycol mit einem Molekulargewicht von 600 bis 2000, Terephthalsäure und 1,4-Butandiol ableiten, bevorzugt.

In einigen Fällen hat es sich als vorteilhaft erwiesen, einen Teil der Terephthalsäure durch Isophthalsäure, Adipinsäure oder Sebacinsäure oder einen Teil des 1,4-Butandiols durch andere Diole, z.B. 1,3-Propandiol, 1,5-Pentandiol oder But-2-en-1,4-diol zu ersetzen. Derartige Produkte werden in der US-A 3 651 014 und der EP-A 49 823 beschrieben.

Verfahren zur Herstellung segmentierter Copolyetherester sind an sich bekannt und in der Literatur beschrieben, so daß sich hier nähere Angaben erübrigen. Hier sei nur auf US-A 3 651 014, US-A 3 784 520 und einen Übersichtsartikel von G.K. Hoeschele (Chimia 28, 544 (1974) verwiesen.

Die Copolyetherester B) können zur Stabilisierung gegen thermischen oder oxidativen Abbau Stabilisatoren enthalten, wie dies beispielsweise in den US-A 4 136 090 und 4 185 003 sowie einem Artikel von G.K. Hoeschele (Angew. Makromolekulare Chemie 58/59, 299 - 319 (1977) zu entnehmen ist.

Neben den Komponenten A) und B) enthalten die erfindungsgemäßen thermoplastischen Formmassen 0,05 bis 1,99, bevorzugt 0,2 bis 1,99 Gew.% Melamincyanurat als Flammschutzmittel.

Das gemäß der Erfindung (Komponente C)) verwendete Melamincyanurat ist ein Reaktionsprodukt aus vorzugsweise äquimolaren Mengen von Melamin (Formel I) und Cyanursäure bzw. Isocyanursäure (Formeln IIa und IIb)

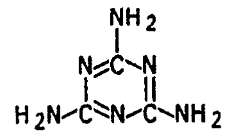

(I)

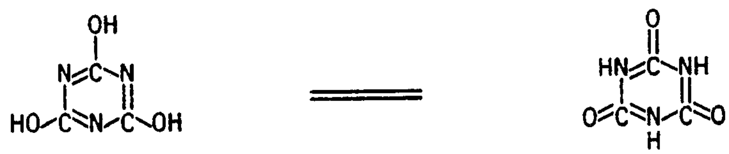

(IIa) Enolform

(IIb) Ketoform

Man erhält es z.B. durch Umsetzung von wäßrigen Lösungen der Ausgangsverbindungen bei 90 bis 100 °C. Das im Handel erhältliche Produkt ist ein weißes Pulver mit einer mittleren Korngröße $d_{50}$ von 69 µm.

Neben den Komponenten A), B) und C) können die erfindungsgemäßen thermoplastischen Formmassen übliche Zusatzstoffe und Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 50 Gew.%, bezogen auf das Gesamtgewicht der Formmassen beträgt.

Die Stabilisatoren können den thermoplastischen Formmassen in jedem Stadium der Herstellung zugesetzt werden, werden jedoch vorzugsweise möglichst früh zugegeben, um zu verhindern, daß die Zersetzung bereits beginnt, bevor der Stabilisator eingearbeitet ist. Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.%, bezogen auf das Gewicht der thermoplastischen Formmasse genannt.

Als UV-Stabilisatoren, die im allgemeinen in Mengen bis zu 2 Gew.%, bezogen auf die Formmasse, verwendet werden, seien verschiedene substituierte Resorcine, Salicylate, Benzotriazole und Benzophenone genannt.

Gleit- und Entformungsmittel werden in der Regel in Mengen von max. 1 Gew.%, bezogen auf das Gesamtgewicht, der Formmasse zugesetzt. Beispiele hierfür sind Stearinsäure, Stearinalkohol und Stearinsäureamide.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bezogen auf das Gesamtgewicht der Formmassen.

Als Keimbildungsmittel können z.B. Talkum, Calciumfluorid, Natriumphenylphosphinat, Aluminiumoxid und feinteiliges Polytetrafluorethylen eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Die Herstellung der erfindungsgemäßen Formmassen kann nach an sich bekannten Verfahren erfolgen, z.B. durch Abmischen in der Schmelze bei erhöhten Temperaturen. Zweckmäßigerweise verwendet man hierzu Extruder, z.B. Einschnecken- oder Zweischneckenextruder oder andere herkömmliche Plastifizierungsvorrichtungen, wie Brabender-Mühlen oder Banbury-Mühlen. Die Herstellung kann aber auch durch gemeinsames Ausfällen der Komponenten aus einer Lösung oder durch Mischen oder Trockenmischen der Komponenten und anschließendes Schmelzstrangpressen des trockenen Gemisches hergestellt werden.

Eine bevorzugte Ausführungsform ist die Einarbeitung des Melamincyanurats in das Polyamid mittels der Batch-Technik. Dazu wird im allgemeinen ein Konzentrat aus 20 Gew.% Melamincyanurat und 80 Gew.% des Polyamids hergestellt, das entsprechend der erfindungsgemäßen Gewichtsanteile der Komponenten A) bis C) bei der Sekundärkonfektionierung verdünnt wird (Einarbeitung der Polyester-Elastomeren und gegebenenfalls weiterer Zusatzstoffe).

Die erfindungsgemäßen Formmassen eignen sich für die Verarbeitung durch Spritzguß oder Extrusion, insbesondere zur Herstellung von hochbeanspruchten, thermostabilen schlagzähen Formteilen für technische Zwecke aller Art.

Dabei ist vor allem die gute Schlagzähigkeit, verbunden mit einer guten Fließfähigkeit und einer guten Steifigkeit, in Kombination mit einem wirksamen Flammschutz von besonderem Vorteil. Die erfindungsgemäßen Formmassen eignen sich insbesondere für Kabelbinder oder Steckerleisten.

Beispiel

Komponente A:

Polyhexamethylenadipinsäureamid mit einer rel. Viskosität (1 g/100 ml in 96 %iger $H_2SO_4$ bei 25°C) von 2,6 (Ultramid® A3 der BASF AG)

Komponente B:

Hytrel® 4056 (Copolyetherester, aufgebaut im wesentlichen aus Einheiten, die sich von Poly(1,4-butylenglycol), Terephthalsäure und 1,4-Butandiol ableiten) mit einer Shore-Härte von 92 A bzw. 40 D (nach ASTM D-2240) und einem Schmelzindex von 4 bis 6,5 g/10 min (190°C, 2,16 kg Belastung) (Hersteller: DuPont de Nemours and Company)

Komponente C:

Melamincyanurat (Firma SKW-Trostberg) mit 69 µm Korngröße ($d_{50}$)

Eine Mischung aus 97,1 Gew.% Ultramid® A3 und 2 Gew.% Hytrel® 4056 und 0,9 Gew.% Melamincyanurat wurde bei 280°C auf einem Zweischneckenextruder abgemischt und aufgeschmolzen und anschließend in ein Wasserbad extrudiert. Nach Granulierung und Trocknung wurden die Mischungen auf einer Spritzgußmaschine zu Rundscheiben mit einem Durchmesser von 60 mm und einer Dicke von 2 mm verspritzt. An rechteckigen Formkörpern von 1,5 mm Dicke und 120 mm x 40 mm wurde der Fallbolzentest nach DIN 53 443, 1. Teil, durchgeführt.

Die IZOD-Kerbschlagzähigkeit nach ISO 180 sowie ASTM D 256 und die Gesamtbrenndauer nach UL-94 (Rechteckstäbe 127 mm x 12,7 mm, Dicke 3,2 mm) gemessen.

Die Ergebnisse sind nachstehend aufgeführt.

| Zusammensetzung der Formmassen [Gew.%] | | | IZOD-Kerbschlagzähigkeit (23°C, ISO 180) [J/m] | Fallbolzentest DIN 53443 Schädigungsarbeit $W_{50}$ [N•m], 23°C | Gesamtbrenndauer UL 94 (3,2 mm) [sec] |
|---|---|---|---|---|---|
| 92 A) | 0 B) | 8 C) | 40 | 20 | 10 |
| 97,1 A) | 2 B) | 0,9 C) | 53 | 100 | 20 |
| 98 A) | 2 B) | 0 C) | 55 | 100 | 200 |

## Ansprüche

1. Flammfeste thermoplastische Formmassen, enthaltend als wesentliche Komponenten
A) 40 bis 99,55 Gew.% eines thermoplastischen Polyamids,
B) 0,45 bis 15 Gew.% eines thermoplastischen Polyester-Elastomeren,
C) 0,05 bis 1,99 Gew.% Melamincyanurat
sowie darüber hinaus
D) 0 bis 50 Gew.% faser- oder teilchenförmige Füllstoffe oder deren Mischungen.

2. Flammfeste thermoplastische Formmassen nach Anspruch 1, enthaltend als wesentliche Komponenten

A) 45 bis 99,35 Gew.% des thermoplastischen Polyamids,

B) 0,45 bis 10 Gew.% des thermoplastischen Polyester-Elastomeren und

C) 0,2 bis 1,99 Gew.% Melamincyanurat.

3. Thermoplastische Formmassen nach Anspruch 1, dadurch gekennzeichnet, daß die Komponente 8) aus Einheiten Ia und Ib

$$O\text{-}G\text{-}O\text{-}\overset{\overset{O}{\|}}{C}\text{-}R\text{-}\overset{\overset{O}{\|}}{C}\text{-} \qquad \text{Ia}$$

und

$$\text{-}O\text{-}D\text{-}O\text{-}\overset{\overset{O}{\|}}{C}\text{-}R\text{-}\overset{\overset{O}{\|}}{C}\text{-} \qquad \text{Ib}$$

aufgebaut ist, wobei

G den zweiwertigen Rest eines Polyalkylenetherdiols,

D den zweiwertigen Rest eines Diols, und

R den zweiwertigen Rest einer Dicarbonsäure

bedeuten.

4. Flammfeste thermoplastische Formmassen nach den Ansprüchen 1 bis 3, in denen die Gewichtsanteile der langkettigen Segmente Ia der Komponente B) 5 bis 70 Gew.% und der kurzkettigen Segmente Ib 30 bis 95 Gew.% beträgt.

5. Verwendung der thermoplastischen Formmassen gemäß den Ansprüchen 1 und 2 zur Herstellung von Formkörpern.

6. Formkörper, erhältlich aus thermoplastischen Formmassen gemäß den Ansprüchen 1 und 2 als wesentlichen Komponenten.

Europäisches Patentamt

# EUROPÄISCHER RECHERCHENBERICHT

Nummer der Anmeldung

EP 89 12 3923

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 180 496 (A. YANAGIMOTO et al.) | | C 08 K 5/349<br>C 08 L 77/00 //<br>(C 08 L 77/00<br>C 08 L 67:02<br>C 08 K 5:349) |
| A | DE-A-3 208 486 (EMS-INVENTA) | | |
| | | | **RECHERCHIERTE SACHGEBIETE (Int. Cl.5)** |
| | | | C 08 K<br>C 08 L |

Der vorliegende Recherchenbericht wurde für alle Patentansprüche erstellt

| Recherchenort | Abschlußdatum der Recherche | Prüfer |
|---|---|---|
| DEN HAAG | 09-04-1990 | LEROY ALAIN |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)